# EUROPEAN PATENT APPLICATION

(11) **EP 3 754 175 A1**
(43) Date of publication of application: **23.12.2020**
(21) Application number: 19209106.4
(22) Date of filing: 14.11.2019
(51) Int. Cl.: F02N 11/00, F02N 11/10, B60K 6/485, F02N 11/08, F02D 41/22

(54) **ENGINE START CONTROL METHOD IN A VEHICLE PROVIDED WITH A STARTER, A MILD-HYBRID STARTER-GENERATOR AND A 48V-BATTERY**

(30) Priority: 17.06.2019 KR 20190071488
(71) Applicant: HYUNDAI MOTOR COMPANY, Seoul 06797 (KR); Kia Motors Corporation, Seoul 06797 (KR)
(72) Inventor: BYUN, Jung-Sup, 13483 Seongnam-si, Gyeonggi-do (KR); LEE, Seung-Woo, 08065 Seoul (KR); WON, Chan-hee, 06281 Seoul (KR); PARK, Seong-Kyu, 18270 Hwaseong-si, Gyeonggi-do (KR)
(74) Representative: Viering, Jentschura & Partner mbB Patent- und Rechtsanwälte

(57) **Abstract**

A 48V vehicle 1 of the present disclosure performs a vehicle start control method by a start stability enhancing strategy control S10 to S60, and the start stability enhancing strategy control S20 to S60 responses to a key start request signal by any one of the start possible methods using a starter 11 or a Mild Hybrid Starter & Generator (MHSG) 13 or a combination of the starter 11 and the MHSG 13 upon the key start request signal, thereby mutually supplementing the situations of the starter start failure or the motor start failure and also protecting the parts of a 48V Mild Hybrid Starter & Generator (MHSG) system 10 upon the key start by applying a start time.

## Description

### BACKGROUND OF THE DISCLOSURE

### Field of the Disclosure

The present disclosure relates to a start control of a 48V vehicle, and more particularly, to a 48V vehicle that satisfies a key start with any one of a starter, a motor, and a starter/MHSG, thereby implementing a start control with the enhanced start stability.

### Description of Related Art

In general, a 48V vehicle is classified as a Mild Hybrid Electric Vehicle, and has a gasoline engine (or diesel engine) and a 48V MHSG system.

For example, the 48V MHSG system includes a Mild Hybrid Starter & Generator (MHSG), a 48V battery, a Low Voltage DC/DC Converter (LDC), and a starter. In particular, the MHSG is connected with a crankshaft of an engine by a belt, and the starter is connected with the crankshaft of the engine for the engine start in the same manner as the conventional starter. Therefore, the 48V MHSG system has the layout according to the P0 type. However, the 48V MHSG system can be configured as the P1 type layout connecting the MHSG to a flywheel connected with the engine, and connecting the starter with the crankshaft of the engine.

Therefore, the 48V MHSG system together implements the motor cranking that transfers the motor-applied torque of the MHSG having the torque greater than that of the starter to the engine by the belt, together with the starter cranking by the starter. In this case, the cranking means the rotation of the crankshaft. In addition, the motor cranking transfers the motor torque to a transmission, and the starter cranking transfers the engine torque to the transmission.

Particularly, in the motor cranking, when the MHSG having received the start request reaches about 300ms, it is possible to reach and maintain a level of the idle rpm to 700RPM or more, thereby having an advantage capable of starting the fuel injection timing at a high engine Revolution Per Minute (RPM). This reason is because the starter cranking causes the starter having received the start request of the key to reach about 300 RPM even after reaching about 300ms.

Therefore, the 48V vehicle can increase the engine RPM to a higher region at the time of starting with the MHSG to reduce the amount of the start fuel by changing the fuel injection timing compared to the conventional one, thereby implementing the high fuel economy improvement effect even in a hybrid vehicle.

The contents described in Description of Related Art are to help the understanding of the background of the present disclosure, and can include what is not previously known to those skilled in the art to which the present disclosure pertains.

### SUMMARY OF THE DISCLOSURE

However, although the 48V vehicle is equipped with the starter and the MHSG capable of a start control, its utilization is limited to require the improvement.

For example, the 48V vehicle has an engine start strategy that distinguishes between the starter and the MHSG, such that it cannot start by using the motor torque of the MHSG by the start unconditionally using the starter in the key start situation (e.g., engine cold start).

In such a key start situation, the starter sole strategy makes it impossible to even attempt the motor cranking by utilizing the backup of the motor when the starter cranking of the starter fails.

Therefore, an object of the present disclosure considering the above point is to provide a vehicle start control method and a 48V vehicle, which can satisfy the key start by any one of the starter, the motor, and the starter/MHSG in connection with the starter and the motor or the motor and the starter for the key start request, thereby enhancing start stability, and particularly, can limit the continued unreasonable failure of the starter cranking or the motor cranking with the start attempt timeout strategy of the starter or the motor, thereby also protecting the parts of the 48V MHSG system when utilizing the mutual backup of the starter and the motor.

In a vehicle start control method of the present disclosure for achieving the object, an engine start determination is performed by a key start controller for detecting a key start request signal, and the engine start determination is performed by a start possible determination control that determines the start applicability for a starter and a MHSG with a soaking time or an engine start temperature or a 48V battery power, a start means determination control that selects any one of starting with a starter, starting with a MHSG, and starting with the starter/MHSG as a start means, and a start backup determination control that switches the start failure caused by selecting any one the starting with the starter, the starting with the MHSG, and starting with the starter/MHSG as the start means to a backup start.

As a preferred embodiment, the start possible determination control is performed by confirming it as the start attempt means by determining any one the starter and the MHSG without failure as limitative start possibility when there is any one failure of the starter and the MHSG, confirming the starter as the start attempt means by determining the operating signal no-response of a starter relay as start impossibility, while determining the operating signal response of the starter relay as start possibility, in a state where there is no failure of the starter, and confirming the MHSG as the start attempt means by determining the non-generation of a CAN signal or the shortage of 48V battery power as start impossibility, while determining the generation of the CAN signal or the satisfaction of the 48V battery power as start possibility, in a state where there is no failure of the MHSG.

As a preferred embodiment, the shortage or the satisfaction of the 48V battery power is confirmed by a battery State Of Charge (SOC) set to a value greater than a battery SOC normal threshold calculated through the matching of a 48V battery SOC, a battery temperature, and a MHSG temperature factor.

As a preferred embodiment, the start means determination control is performed by determining by applying the soaking time or the engine start temperature or the 48V battery power as a starter start condition; applying the start of the starter as the start attempt means when satisfying the starter start condition; applying the start of the MHSG or the start of the starter/MHSG as the start attempt means by applying the battery SOC as a motor start condition when not satisfying the starter start condition, and completing the start by the start attempt by the start with the starter or the start with the MHSG or the start with the starter/MHSG.

As a preferred embodiment, the satisfaction and non-satisfaction for the starter start condition is determined by a detection value of the soaking time or a detection value of the engine start temperature or a battery SOC lower threshold for the battery SOC of the 48V battery power, and the battery SOC lower threshold is calculated through the matching of the 48V battery SOC, the battery temperature, and the MHSG temperature factor.

As a preferred embodiment, the motor start condition applies a battery SOC lower threshold and a battery SOC upper threshold to the battery SOC, and the start with the starter/MHSG is confirmed when the detection value of the battery SOC falls within the region of the battery SOC upper/lower thresholds, while the start with the MHSG is confirmed when it is out of region.

As a preferred embodiment, the start backup determination control is performed by determining the start non-completion by applying the start attempt by the start with the starter or the start with the MHSG as an initial start attempt; performing a backup start determination control S50 with a backup switching variable in the state of the start non-completion; and performing the backup start control S60 by the backup start attempt excluding the initial start attempt.

As a preferred embodiment, the backup start determination control is performed by detecting a start attempt time accumulated by a timer as the backup switching variable, and performing backup condition determination by applying a threshold for the start attempt time as the condition satisfaction.

As a preferred embodiment, the backup start control is performed by confirming a current start device not reaching the start completion; selecting a backup start device to which the current start device is replaced; determining backup start completion by the backup start attempt by the backup start device; and switching to system protection measure by performing backup condition determination by the condition satisfaction for a backup switching variable before determining the backup start completion, and stopping the backup start attempt upon the backup condition determination.

As a preferred embodiment, the current start device is any one of the starter and the MHSG in the operating state, and the backup start device is any one of the starter and the MHSG in the non-operating state.

As a preferred embodiment, the backup switching variable is a backup start attempt time accumulated by a timer, and the backup condition determination applies a backup start attempt time threshold for the backup start attempt time.

Then, a 48V vehicle of the present disclosure for achieving the object includes a key start controller for responding to a key start request signal by applying any one of the starter start using a starter, the motor start using a MHSG, and the starter/MHSG start using the mutual cooperation between the starter and the MHSG as the engine start; and a 48V MHSG for starting an engine by the starter and the MHSG.

As a preferred embodiment, the key start controller applies a battery State Of Charge (SOC) threshold of a 48V battery to the starter start, the MHSG start, and the starter/MHSG start, and the battery SOC threshold is calculated by matching the battery SOC and the battery temperature of the 48V battery and the MHSG temperature factor of the MHSG.

As a preferred embodiment, the 48V MHSG system is a P0 type 48V MHSG system in which the MHSG is connected with a crankshaft of the engine by a belt.

The start control implemented in the 48V vehicle of the present disclosure implements the following operations and effects.

Firstly, it is possible for the 48V vehicle to utilize the motor of the MHSG as the backup upon the key start, thereby resolving the disadvantages conventionally caused by the absence of the start strategy in which the key start depends upon only the starter, and particularly, any one of the starter, the motor, and the starter/MHSG satisfies the key start, thereby enhancing the start stability. Secondly, it is possible for the starter and the motor to be utilized for the start together, thereby enhancing merchantability of the 48V vehicle by the reduction in the start failure rate of the initial start means. Thirdly, it is possible to individually respond to the key start request by the start of the starter or the start of the motor or to cooperatively respond thereto by the start of the starter and the motor, thereby diversifying the key start strategy. Fourthly, it is possible for the key start of the 48V vehicle to utilize the motor, thereby shortening the start time compared to the use of the starter. Fifthly, it is possible to further improve the fuel economy effect through the reduction in the amount of fuel by the fuel injection timing that starts from the high engine RPM compared to the use of the starter upon the motor cranking even in the key start of the 48V vehicle. Sixthly, it is possible to protect the parts of the MHSG system through the start time restriction by the backup start function of the motor with respect to the starter upon the key start.

### BRIEF DESCRIPTION OF THE DRAWINGS

FIG. 1 is a flowchart showing that a vehicle start control method according to the present disclosure is implemented by a start possible determination control, a start means determination control, and a backup start determination control with respect to a key start signal.
FIG. 2 is a diagram showing an example of a 48V vehicle in which the vehicle start control according to the present disclosure is implemented.
FIG. 3 is a line diagram of the starter cranking, to which a starter is applied, of the vehicle start control according to the present disclosure.
FIG. 4 is a line diagram of the starter cranking, to which a MHSG is applied, of the vehicle start control according to the present disclosure.
FIG. 5 is a line diagram of the motor/starter cranking, to which the MHSG and the starter are applied together, of the vehicle start control according to the present disclosure.
FIG. 6 is a flowchart of the start possible determination control among the vehicle start control according to the present disclosure.
FIG. 7 is a flowchart of the system start means determination control among the vehicle start control according to the present disclosure.
FIG. 8 is a flowchart of the system back-up start control following the backup start determination control among the vehicle start control according to the present disclosure.

### DESCRIPTION OF SPECIFIC EMBODIMENTS

Hereinafter, exemplary embodiments of the present disclosure will be described in detail with reference to the accompanying exemplary drawings, these embodiments are an example and can be implemented in various different forms by those skilled in the art to which the present disclosure pertains, such that the present disclosure is not limited to the embodiments described herein.

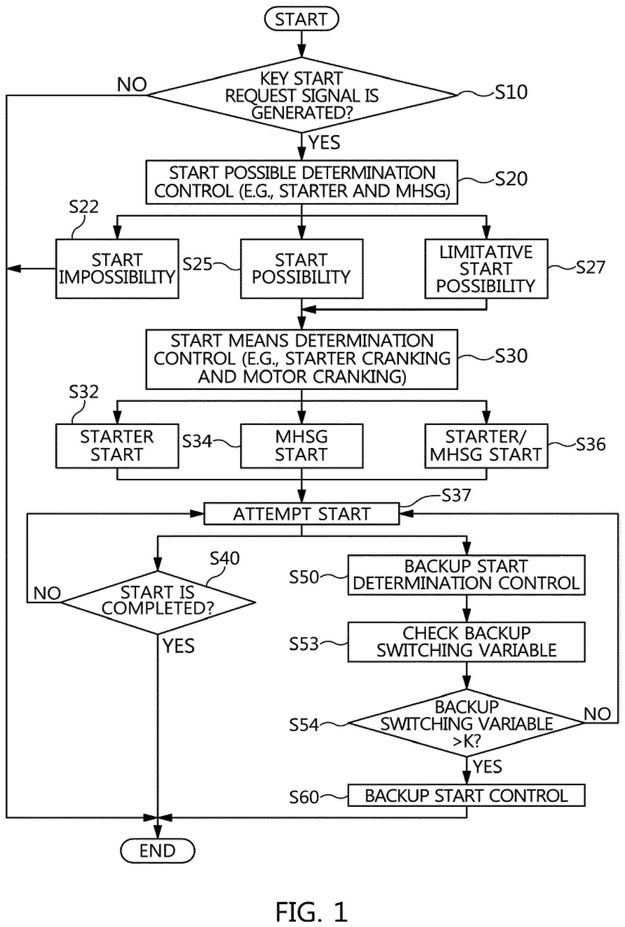

Referring to FIG. 1, a vehicle start control method includes a start stability enhancing strategy control S10 to S60, which determines one of the possible start methods that have been confirmed by a combination of a starter and a MHSG as a current start method of a key start request signal generating timing, and in addition, switches another one of the starter, a motor, and the starter/the MHSG with respect to the failure of the current start method into a backup start, thereby securing the key start stability.

Particularly, the start stability enhancing strategy control S20 to S60 can supplement the start failure state that can occur in the starter upon the key start by a start key signal S10 by a motor torque through the backup of a Mild Hybrid Starter & Generator (MHSG), thereby overcoming the limitation of the conventional vulnerable start strategy in which the key start depends upon only the starter, and also providing the more enhanced start stability.

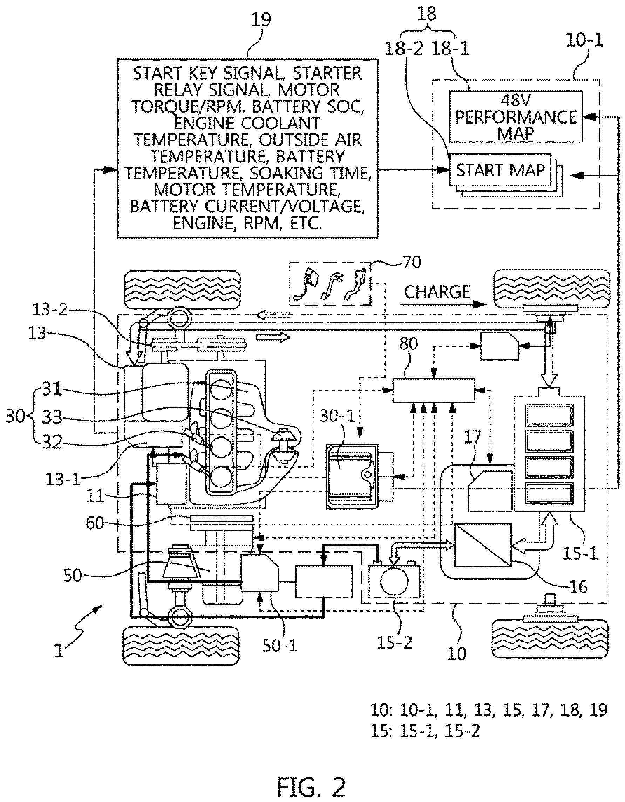

Referring to FIG. 2, shown is an example of constructing a 48V vehicle 1 for implementing a vehicle start control, which is characterized by the start-up stability enhancing strategy control S20 to S60.

As shown, the 48V vehicle 1 includes a 48V Mild Hybrid Starter & Generator (MHSG) system 10, an engine system 30, and other systems. Therefore, the 48V vehicle 1 is an example of a Mild Hybrid Electric Vehicle.

Specifically, the 48V MHSG system 10 is composed of a key start controller 10-1, a starter 11, a Mild Hybrid Starter & Generator (MHSG) 13, a Motor Control Unit (MCU) 13-1, a battery 15, a Low Voltage DC/DC Converter (LDC) 16, and a Battery Management System (BMS) 17.

For example, the key start controller 10-1 stores in a memory the programming that classifies the start stability enhancing strategy control S10 to S60 into a start possible determination control S20, S24, S25, S27 that determines the start applicability of the starter 11 and the MHSG 13 with a soaking time, an engine start temperature, and a 48V battery state upon the key start S10, a start means determination control S30, S32, S35, S36, S37 that selects starting with the starter, starting with the MHSG, and starting with the starter/MHSG, and a start backup determination control S40, S50, S60 that switches it into the backup start with respect to the start failure by any one of the starting with the starter, the starting with the MHSG, and the starting with the starter/MHSG.

For this purpose, the key start controller 10-1 operates as a central processing unit connected with the memory, and includes a backup map 18 and a data processor 19 to read or compute, and calculate necessary information or data.

Particularly, the backup map 18 is composed of a 48V performance map 18-1 connected with the BMS 17 for controlling the battery 5, and a key start map 18-2 for matching the key start with any one of the starting with the starter, the starting with the MHSG, and the starting with the starter/MHSG. In this case, the 48V performance map 18-1 matches the 48V battery SOC and the battery temperature with the MHSG temperature (e.g., motor temperature) factor to determine whether the 48V battery 15-1 sufficiently maintains the SOC required for the start of the MHSG according to the key start request to provide it to the key start controller 10-1.

Then, the data processor 19 transmits detection information of the 48V MHSG system 10, the engine system, and other systems to the key start controller 10-1 as input data. In this case, the detection information of the data processor 19 includes a start key signal, a starter relay signal, a motor torque/Revolution Per Minute (RPM), a battery State Of Charge (SOC), an engine coolant temperature, an outside air temperature, a battery temperature, a soaking time, a motor temperature, a battery current/voltage, an engine RPM, a CAN signal, and an injector normal/fault signal of an injector 32.

For example, the starter 11 is connected to the crankshaft of an engine 31 such as the conventional starter so as to perform a key start request, and the MHSG 13 has an inverter together with the motor connected with the crankshaft of the engine 31 by a belt 13-2 at the side opposite to the starter 11 so as to perform the key start request in connection with the starter 11. Therefore, the starter 11 and the MHSG 13 constitute the 48V MHSG system 10 as a P0 type 48V MHSG system. The MCU 13-1 controls so that the MHSG 13 performs the key start according to the MHSG start logic or the starter/MHSG start logic in connection with the key start controller 10-1.

For example, the battery 15 is composed of a high-voltage type 48V battery 15-1 and a low-voltage type 12V battery 15-2. The LDC 16 stores the electrical energy for driving the motor of the MHSG 13 while performing the 12V voltage conversion. The BMS 17 measures a battery cell temperature, a battery coolant temperature, an outside air temperature (e.g., atmospheric temperature) to perform the battery heat management control according to the temperature condition, and particularly, to provide the battery SOC and the voltage information of 48V and 12V to the key start controller 10-1.

Specifically, the engine system 30 includes an engine Electronic Control Unit (ECU) 30-1, an engine 31, an injector 32, and a turbocharger 33.

For example, the engine ECU 30-1 controls the engine 31, and transmits the engine system information to the key start controller 10-1 by the data processor 19. The engine 31 is a gasoline engine or a diesel engine. The injector 32 injects fuel into a combustion chamber of the engine 31 under the control of the engine ECU 30-1. The turbocharger 33 is driven by the exhaust gas from the engine 31 to supercharge the intake air supplied to the engine 31.

Specifically, the other systems are a basic component of the 48V vehicle 1, and include a transmission 50, a Transmission Control Unit (TCU) 50-1, an engine clutch 60, a pedal 70 and a CAN 80.

For example, the transmission 50 outputs the power of the engine 31 as a torque corresponding to a shift stage. The TCU 50-1 controls the shift stage of the transmission 50 according to the operating state of the 48V vehicle 1 in connection with the engine ECU 30-1. The engine clutch 60 connects and disconnects the engine 31 and the transmission 50. The pedal 70 is classified into a clutch pedal for connecting and disconnecting the engine clutch 60, a brake pedal for braking the 48V vehicle 1, and an accelerator pedal for accelerating the 48V vehicle 1. The Controller Area Network (CAN) 80 is a vehicle communication network, and can transmit and receive the mutual information and data between the key start controller 10-1, the MCU 13-1, the engine ECU 30-1, and the TCU 50-1.

Hereinafter, the vehicle start control method of FIG. 1 will be described in detail with reference to FIGS. 2 to 8. In this case, the control subject is the key start controller 10-1 connected with the MCU 13-1 and the engine ECU 30-1, and the control objects are the starter 11 and the MHSG 13.

Referring to FIG. 1, the key start controller 10-1 enters the start stability enhancing strategy control S10 to S60 by detecting generation of a key start request signal S10. Referring to FIG. 2, the key start controller 10-1 confirms the key start request with the start key signal among the data read by the data processor 19 from the engine ECU 30-1 using the starter key signal, and in addition, confirms an injector normal signal of the injector 32.

Then, the key start controller 10-1 implements the start stability enhancing strategy control S10 to S60 with the start possible determination controls S20, S24, S25, S27, the start means determination control S30, S32, S35, S36, S37, and the start backup determination control S40, S50, S60.

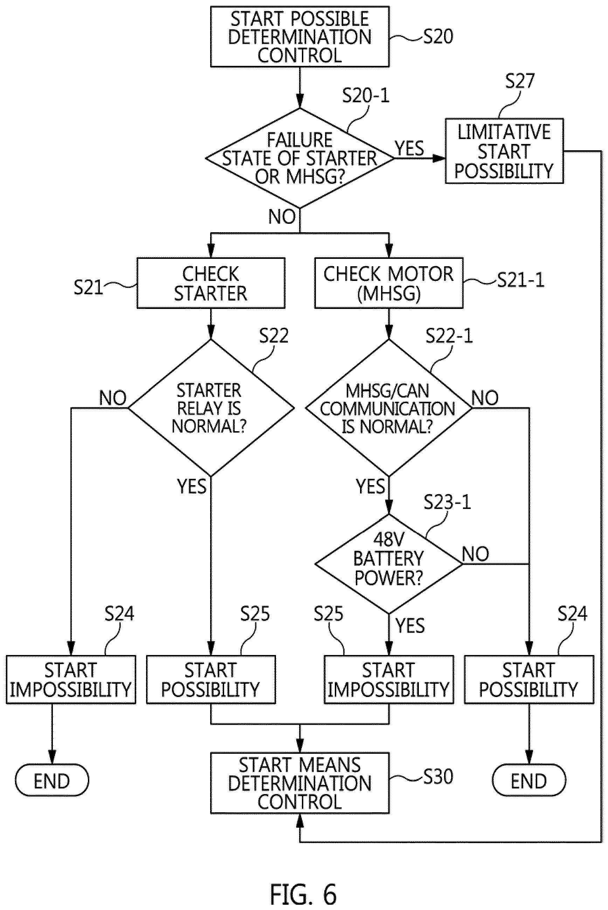

For example, the start possible determination control S20, S24, S25, S27 determines start impossibility S24 in which both sides cannot be applied as the start attempt means, start possibility S25 in which both sides can be applied as the start attempt means, and limitative start possibility S27 in which only one side can be applied as the start attempt means considering the soaking time, the engine start temperature, and the 48V battery state by checking the hardware for each of the starter 11 and the MHSG 13. A detailed description thereof is shown in FIG. 6.

Therefore, the start possible determination control S20, S24, S25, S27 stops the key start procedure together with the message output of the key start fail in the start impossibility S24, while it enters the start means determination control S30, S32, S35, S36, S37 in the start possibility S25 and the limitative start possibility S27.

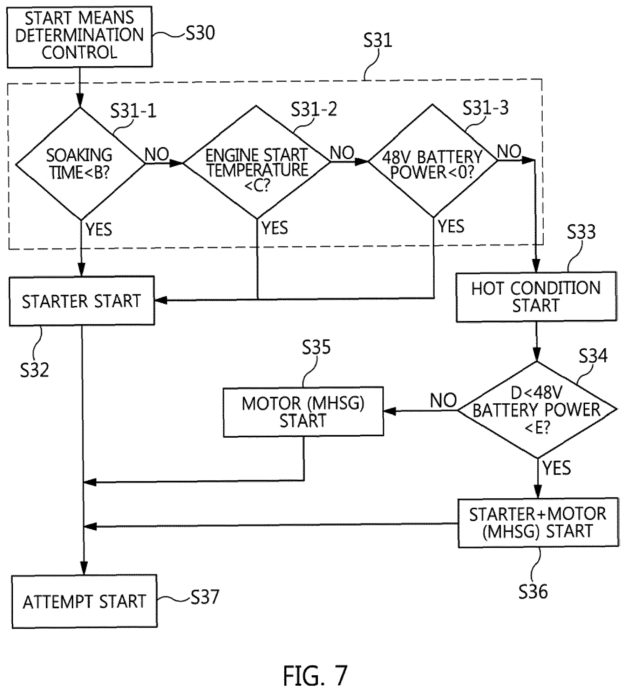

For example, the start means determination control S30, S32, S35, S36, S37 is classified into starting with the starter S32 that drives the starter with respect to the key start request signal, starting with the MHSG S35 that drives the MHSG with respect to the key start request signal, starting with the starter/MHSG S36 that switches the driving from the starter into the MHSG or switches the driving from the MHSG into the starter with respect to the key start request signal S36, and start attempt S37. A detailed description thereof is shown in FIG. 7.

Therefore, the start means determination control S30, S32, S35, S36, S37 selects any one of the starting with the starter S32, the starting with the MHSG S35, and the starting with the starter/MHSG S36 as the start attempt means to enter the start backup determination control S40, S50, S60.

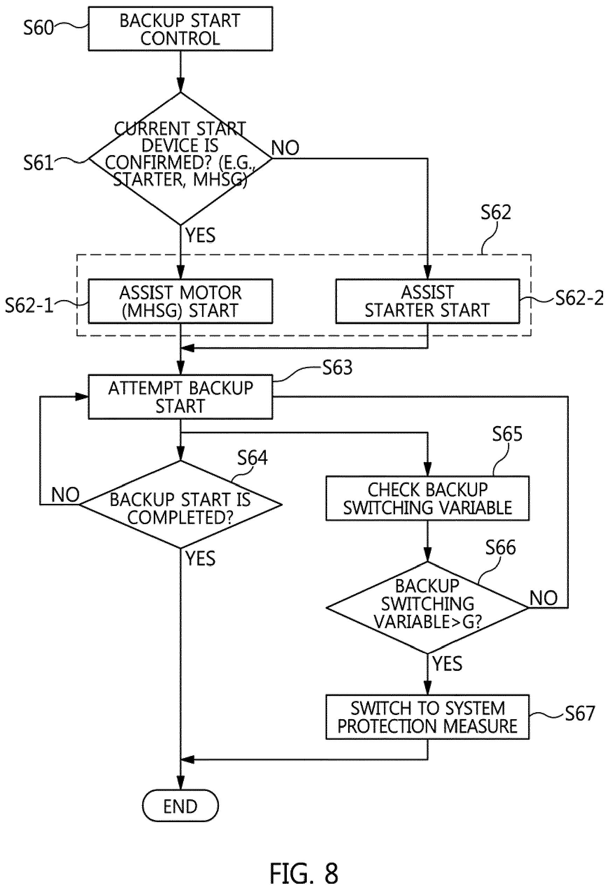

For example, the start backup determination control S40, S50, S60 is not performed in the start in start completion determination S40 but is performed with a backup start determination control S50 and a backup start control S60 in the start fail. A detailed description thereof is shown in FIG. 8.

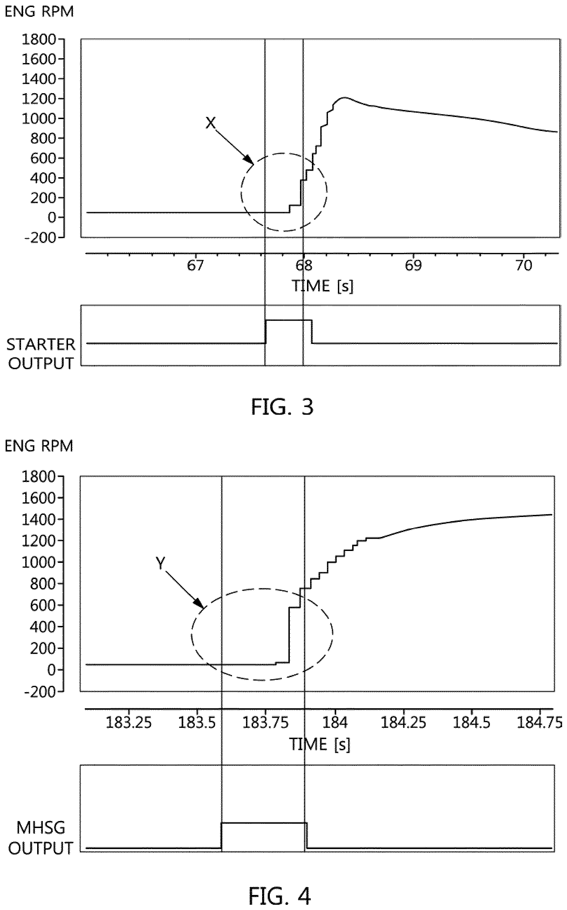

Meanwhile, FIGS. 3 to 5 are the line diagrams of the cranking according to the starting with the starter S32, the starting with the MHSG S35, and the starting with the starter/MHSG S36 selected as the start means in the start means determination control S30, S32, S35, S36, S37.

Referring to FIG. 3, shown is the line diagram result of the starter cranking of the engine 31 when the engine 31 is started in the system start control S50 that applies the starter 11 with respect to the key start request. Therefore, the line diagram of the starter cranking indicates that it reaches a cranking RPM region (X) in about 300ms time after the key start request to be switched to the normal engine start state.

Referring to FIG. 4, shown is the line diagram result of the motor cranking of the engine 31 when the engine 31 is started by the system start control S50 that applies the MHSG 13 with respect to the key start request. Therefore, the line diagram of the motor cranking indicates that it already reaches an idle RPM region (Y) at about 700rpm in about 300ms time after the key start request to be switched to the normal engine start state. This result shows that the key start by the MHSG 13 can start the fuel injection timing at the high engine RPM, thereby reducing the amount of the start fuel.

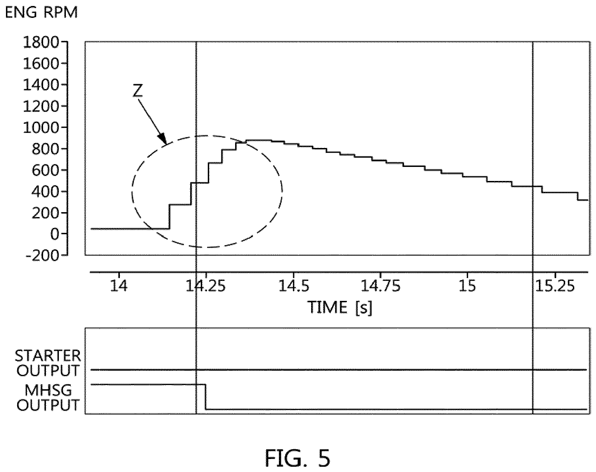

Referring to FIG. 5, it indicates that the normal increase shortage of the engine RPM by the start of the MHSG reaches an idle RPM abnormal region (Z) by the start of the starter 11 to be switched to the normal engine start state when the engine 31 is started by the system backup start control S60 that utilizes the starter 11 as an assist while applying the MHSG 13 with respect to the key start request. This result can allow it to attempt the key start backup by the start cooperative control of the MHSG 13 or the starter 11 with respect to the normal engine RPM increase failure of the starter cranking or the motor cranking according to the sole strategy of the starter 11 or the MHSG 13 in the key start situation.

Meanwhile, FIGS. 6 to 9 show the specific procedures of the start possible determination control S20, S24, S25, S27, the start means determination control S30, S32, S35, S36, S37, and the start backup determination control S40, S50, S60.

Referring to FIG. 6, the key start controller 10-1 uses the starter relay signal, the CAN signal, the battery SOC, and the 48V battery current/voltage among the data read by the data processor 19 from the engine ECU 30-1 for the start possible determination control S20, S24, S25, S27.

Specifically, the start possible determination control S20, S24, S25, S27 determines the start possibility by classifying the key start request into the start impossibility S24, the start possibility S25, and the limitative start possibility S27 by determining the key start request with confirming the failure of the starter/MHSG S20-1, confirming the starter S21, S22, and confirming the motor (i.e., MHSG) S21-1, S22-1, S23-1.

For example, the determining the failure of the starter/MHSG S20-1 determines the operation impossibility for each of the starter and the MHSG according to the generation of the hardware bit of the CAN communication with respect to the failure of the starter and the MHSG.

Therefore, when the confirmation of the normal bit is confirmed in only one side of the starter or the MHSG among the starter and MHSG, the key start controller 10-1 enters the limitative start possibility S27 and then is switched to the start means determination control S30, S32, S35, S36, S37.

Conversely, when the confirmation of the normal bit is confirmed in both the starter and the MHSG, the key start controller 10-1 confirms the confirming the starter S21, S22 and the confirming the motor (i.e., MHSG) S21-1, S22-1, S23-1 and then is switched to the start means determination control S30, S32, S35, S36, S37.

For example, the confirming the starter S21, S22 determines the signal abnormality of the starter relay as the start impossibility S24 as in the S22 by entering the checking the starter as in the S21, while it determines the signal normality of the starter relay as the start possibility S25. In this case, the signal abnormality or normality of the starter relay is determined according to whether the starter 11 operates in response to a relay signal.

For example, the confirming the motor (i.e., MHSG) S21-1, S22-1, S23-1 determines the communication poor state as in the S22-1 or the communication normal state or the unsatisfied power condition of the 48V battery as in the S23-1 as the start impossibility S24 by entering the checking the motor (i.e., MHSG) as in the S21-1, while it determines the satisfied power condition of the 48V battery as in the S23-1 as the start possibility S25 in the communication normal state between the MHSG and the CAN as in the S22-1.

For this purpose, the CAN communication state is confirmed whether it is normal by an "OK signal" of the CAN signal exchanged by the MCU 13-1 and the CAN 80. On the other hand, the determining the satisfied power condition of the 48V battery S23-1 applies the following battery power state formula.

Battery power state formula: 48V battery power > A

Herein, the ">" refers to an inequality indicating the magnitude relationship of two values, the "48V battery power" refers to the battery SOC of the 48V battery 15-1 detected when the key start signal is generated, and the "A" refers to the battery SOC normal threshold of the 48V battery capable of the start of the MHSG.

Particularly, the battery SOC normal threshold (A) is decided by matching the 48V battery SOC and the battery temperature with the MHSG temperature (e.g., motor temperature) factor by the 48V performance MAP 18-1 (see FIG. 2) at the time of detecting the battery SOC of the 48V battery 15-1. This reason is because the factor is a value depending upon the motor temperature of the MHSG 13, and considers the generation of the derating (i.e., the state reducing the load more than a rated value for enhancing reliability) with respect to the motor performance of the MHSG 13 when it is a temperature higher than the normal temperature. Therefore, the battery SOC normal threshold (A) is a value that is changed according to the condition as a function of the 48V battery SOC/the battery temperature/the MHSG temperature factor, such that it is not limited to a specific value.

Meanwhile, the start possibility S25 and the limitative start possibility S27 are switched to the start impossibility S24 when detecting the injector fault signal upon the start request, such that the start request and the injector normal signal are determined as a start allowable common condition. However, the 48V vehicle 1 equipped with an immobilizer (a transponder and an electronic control device embedded in an ignition key and a vehicle anti-theft device that electronically locks the engine start) can determine an immobilizer allowable signal in addition to the start request and the injector normal signal as the start allowable common condition.

Therefore, the key start controller 10-1 stops the start procedure of the 48V vehicle 1 in the start impossibility S24 to output the driver warning, while it enters the start means determination control S30, S32, S35, S36, S37 in the limitative start possibility S27 to continue the procedure of the key start request.

Referring to FIG. 7, the key start controller 10-1 uses the soaking time, the engine coolant temperature, the outside air temperature, the battery temperature, the motor temperature, the upper and lower limit values of the 48V battery among the data read by the data processor 19 from the engine ECU 30-1 for the start mean determination control S30, S32, S35, S36, S37.

For example, the start means determination control S30, S32, S35, S36, S37 determines starting with the starter S32 through determining the starter start condition S31, and starting with the MHSG S35 and starting with the starter/MHSG S36 by applying the 48V battery power condition S34 corresponding to a hot start condition S33 to determining the motor start condition, and then performs attempting the start S37.

For example, the determining the starter start condition S31 is composed of determining the soaking time that indicates an elapsed time after the engine start is turned off S31-1, determining the engine start temperature that indicates the engine coolant temperature S31-2, and determining the 48V battery power indicating the SOC of the 48V battery S31-3. Particularly, the determining the soaking time S31-1 applies the following soaking time determination formula, the determining the engine start temperature S31-2 applies an engine start temperature determination formula, and the determining the 48V battery power S31-3 applies a 48V battery lower limit determination formula, respectively.
Soaking time determination formula: soaking time < B
Engine start temperature determination formula: engine start temperature < C
48V battery lower limit formula: 48V battery power < D

Herein, the "<" refers to an inequality indicating the magnitude relationship between the two values, the "soaking time" refers to an engine wait time until the engine 31 is restarted (i.e., start ON) after being stopped (i.e., start OFF) when the key start signal is generated, the "B" refers to a soaking time threshold, the "engine start temperature" refers to an engine coolant temperature of the engine 31 when the key start signal is generated, the "C" refers to an engine coolant temperature threshold, the "48V battery power" refers to the battery SOC of the 48V battery 15-1 detected when the key start signal is generated, and the "D" refers to the battery SOC lower threshold of the 48V battery capable of the start of the MHSG.

Particularly, the soaking time threshold (B) is not numerically expressed to a specific value because the soaking time is calculated by matching the outside air temperature of the surrounding environment where the 48V vehicle 1 has been parked or stopped. The engine coolant temperature threshold (C) is not numerically expressed to a specific value because it is changed according to the soaking time and the outside air temperature.

In addition, the battery SOC lower threshold (D) is decided by matching the 48V battery SOC and the battery temperature with the MHSG temperature (e.g., motor temperature) factor by the 48V performance MAP 18-1 (see FIG. 2) at the time of detecting the battery SOC of the 48V battery 15-1. This reason is because the factor is a value depending upon the motor temperature of the MHSG 13, and considers the generation of the derating (i.e., the state reducing the load more than a rated value for enhancing reliability) with respect to the motor performance of the MHSG 13 when it is a temperature higher than the normal temperature. Therefore, the battery SOC lower threshold (D) is a value that is changed according to the condition as a function of the 48V battery SOC/the battery temperature/the MHSG temperature factor, such that it is not limited to a specific value.

For example, the starting with the starter S32 is established when the soaking time is smaller than the (B) or the soaking time is greater than the (B) but the engine start temperature is smaller than the (C) or the soaking time is greater than the (B) and the engine start temperature is greater than the (C) but the 48V battery power is smaller than the (D) in the determining the starter start condition S31.

Then, the key start controller 10-1 provides the starting with the starter S32 to a system fail-safe start control S40.

For example, the hot start condition S33 for determining the motor start condition is established when the soaking time is greater than the soaking time threshold (B), the engine start temperature is greater than the engine coolant temperature threshold (C), and the 48V battery power is greater than the battery SOC lower threshold (D) in the determining the starter start condition S31. In addition, the determining the 48V battery power condition S34 for determining the motor start condition is performed by applying the hot start condition S33 followed by the following 48V battery upper/lower limit determination formula.

48V battery upper/lower limit determination formula: D < 48V battery power < E

Herein, the "<, >" refers to an inequality indicating the magnitude relationship between the two values, the "48V battery power" refers to the battery SOC of the 48V battery 15-1 detected when the key start signal is generated, the "D" refers to the battery SOC lower threshold of the 48V battery capable of the start of the MHSG, and the "E" refers to the battery SOC upper threshold of the 48V battery capable of the start of the MHSG.

Particularly, the battery SOC upper threshold (E) is decided by matching the 48V battery SOC and the battery temperature with the MHSG temperature (e.g., motor temperature) factor by the 48V performance MAP 18-1 (see FIG. 2) at the time of detecting the battery SOC of the 48V battery 15-1 in the same manner as the battery SOC lower threshold (D). This reason is because the factor is a value depending upon the motor temperature of the MHSG 13, and considers the generation of the derating (i.e., the state reducing the load more than a rated value for enhancing reliability) with respect to the motor performance of the MHSG 13 when it is a temperature higher than the normal temperature. Therefore, the battery SOC lower threshold (D) is a value that is changed according to the condition as a function of the 48V battery SOC/the battery temperature/the MHSG temperature factor, such that it is not limited to a specific value.

For example, the starting with the MHSG S35 is established when satisfying the condition where the 48V battery power is greater than the (D) and smaller than the (E) in the determining the 48V battery power condition S34. Conversely, the starting with the starter/MHSG S36 is established when not satisfying the condition where the 48V battery power is greater than the (D) and smaller than the (E) in the determining the 48V battery power condition S34.

For example, the attempting the start S37 is performed by any one selected as the start attempt means among the starting with the starter S32, the starting with the MHSG S35, and the starting with the starter/MHSG S36.

Referring back to FIG. 1, the key start controller 10-1 exits the start backup determination control S40, S50, S60 to terminate the overall logic when the start is completed in determining the start completion S40 in the start backup determination control S40, S50, S60. In this case, the start completion is confirmed from the engine information detected by the data processor 19, such as the engine RPM.

Conversely, the key start controller 10-1 switches it to the backup start determination control S50 and the backup start control S60 when the start is not completed in the determining the start completion S40 in the start backup determination control S40, S50, S60.

Specifically, the start backup determination control S40, S50, S60 is performed by determining the start non-completion by applying the attempting the start by the start of the starter or the start of the MHSG as the initial start attempt S40, performing the backup start determination control with a backup switching variable in a state where a current start device that applies the start of the starter or the start of the MHSG as the initial start attempt has not completed the start S50, and performing the backup start control by the backup start attempt that applies any one not applied as the initial start attempt of the start of the starter or the start of the MHSG to the backup start device S60.

For example, the backup start determination control S50 is switched to the system backup start control S60 through checking the backup switching variable S53 and determining the backup switching variable S54. Particularly, the key start controller 10-1 can switch the starting with the starter S32 or the starting with the MHSG S35 or the starting with the starter/MHSG S36 to the start means through the backup switching variable, respectively.

Referring to FIG. 2, the key start controller 10-1 outputs a starter relay ON signal to the engine ECU 31 by using a CAN 80 to turn on the relay or outputs a motor duty signal to the MCU 13-1 to drive the motor. Then, the key start controller 10-1 confirms the operation information of the engine 31 detected by the engine ECU 31 by using the CAN 80 to determine the start completion.

Therefore, the key start controller 10-1 terminates the system start control S50 by determining the start completion S52. On the other hand, the key start controller 10-1 performs the checking the backup switching variable S53 until the determining the start completion S52 is performed.

For example, the checking the backup switching variable S53 applies the backup switching variable, and the backup switching variable is accumulated by applying the times of attempting the start S51 and completing the start S52 as the start attempt time. Referring to FIG. 2, the key start controller 10-1 accumulates the start attempt time with a timer, and the timer starts at the time point of outputting the starter relay ON signal or the time point of outputting the motor duty signal to terminate at the time point of detecting the engine start completion of the engine ECU 31.

For example, the determining the backup switching variable S54 applies the following backup switching formula.

Backup switching formula: backup switching variable > K

Herein, the "backup switching variable" refers to the timer accumulation time having elapsed since the attempting the start, and the "K" refers to the start attempt time threshold. Particularly, the start attempt time threshold (K) is calculated by matching the outside air temperature of the surrounding environment where the 48V vehicle 1 has been parked or stopped and the engine coolant temperature of the start attempt timing, such that it is not numerically expressed to a specific value.

Therefore, when the timer accumulation time is not greater than the (K) through the determining the backup switching variable S54, the key start controller 10-1 feedbacks to the attempting the start S51 to repeat the determining the backup completion S52, the checking the backup switching variable S53, and the determining the backup switching variable S54.

Conversely, when the timer accumulation time is greater than the (K) through the determining the backup switching variable S54, the key start controller 10-1 switches to the system backup start control S60.

Meanwhile, referring to FIG. 8, the key start controller 10-1 performs the backup start control S60 with confirming the current start device S61, preparing the backup S62, attempting the backup start S63, determining the backup start completion S64, checking the backup switching variable S65, determining the backup switching variable S66, and switching to the system protection measure S67.

For example, the confirming the current start device S61 is determined by the operating state of the starter 11 or the MHSG 13. The preparing the backup S62 is classified into assisting the start of the MHSG S62-1 and assisting the start of the starter S62-2. The assisting the start of the MHSG S62-1 is a case where the starter 11 has been confirmed as the current start device in the confirming the current start device S61. On the other hand, the assisting the start of the starter S62-2 is a case where the MHSG 13 has been confirmed as the current start device in the confirming the current start device S61.

Referring to FIG. 2, the key start controller 10-1 determines the current operating state of the starter 11 or the MHSG 13 with the starter relay ON signal output to the engine ECU 31 or the motor duty signal output to the MCU 13-1. In addition, the key start controller 10-1 outputs the motor duty signal to the MCU 13-1 to drive the motor by using the CAN 80 to switch the MHSG 13 to the start assist for the starter 11.

For example, the attempting the backup start S63 is to begin the start of MHSG during the start of the starter or begin the start of the starter during the start of the MHSG. The determining the backup start completion S64 determines as the state where the engine 31 has reached the normal operating state by completing the start of the starter by the start of the MHSG or determines as the state where the engine 31 has reached the normal operating state by completing the start of the MHSG by the start of the starter.

Referring to FIG. 2, the key start controller 10-1 determines the start completion by confirming the operation information of the engine 31 detected by the engine ECU 31 by using the CAN 80.

Therefore, the key start controller 10-1 terminates the system backup start control S60 in the determining the backup start completion S64.

On the other hand, the key start controller 10-1 performs the checking the backup switching variable S65 until the determining the backup start completion S64 is performed.

For example, the checking the backup switching variable S65 applies the backup switching variable, and the backup switching variable is accumulated by applying the times of the attempting the backup start S63 and the determining the backup start completion S64 as the backup start attempt time. Referring to FIG. 2, the key start controller 10-1 accumulates the backup start attempt time with a timer, and the timer starts at the time point of outputting the motor duty signal or the time point of outputting the starter relay ON signal to terminate at the time point of detecting the engine start completion of the engine ECU 31.

For example, the determining the backup switching variable S66 applies the following backup switching formula.

Backup switching formula: backup switching variable > G

Herein, the "backup switching variable" refers to the timer accumulation time having elapsed since the attempting the backup start, and the "G" refers to the backup start attempt time threshold. Particularly, the backup start attempt time threshold (G) is calculated by matching the outside air temperature of the surrounding environment where the 48V vehicle 1 has been parked or stopped with the engine coolant temperature of the start attempt timing, such that it is not numerically expressed to a specific value. In this case, the backup start attempt time threshold (G) applied to the system backup start control S60 can be set the same as the backup start attempt time threshold (K) applied to the system start control S50, or set differently therefrom.

Therefore, when the timer accumulation time is not greater than the (G) through the determining the backup switching variable S66, the key start controller 10-1 feedbacks to the attempting the backup start S63 to repeat the determining the backup start completion S64, checking the backup switching variable S65, and determining the backup switching variable S66.

Conversely, when the timer accumulation time is greater than the (G) through the determining the backup switching variable S66, the key start controller 10-1 switches it to the switching to the system protection measure S67.

For example, the switching the system protection measure S67 is the shutdown of the start. The shutdown of the start prevents damage to other parts including the starter 11 and the MHSG 13 of the 48V MHSG system 10 that can be caused by the prolonged start attempt exceeding a predetermined threshold.

Therefore, the key start controller 10-1 terminates the system backup start control S60 by the switching the system protection measure S67.

As described above, the vehicle start control method extends the start of the key of the 48V vehicle 1, which used only the conventional starter through the start stability enhancing strategy control S20 to S60, to the start of the motor by utilizing the MHSG 13, thereby shortening the start time through the motor torque greater than that of the starter, improving the fuel economy through the reduction in the amount of fuel according to the increase in the engine RPM region and the change in the fuel injection timing, and protecting the parts of the system through the reduction in the start failure rate and the start time restriction.

As described above, the vehicle start control method of the 48V vehicle 1 according to the present embodiment applies the start stability enhancing strategy control S10 to S60, and the start stability enhancing strategy control S20 to S60 can response to the key start request signal by any one of the start possible methods using the starter 11 or the MHSG 13 or a combination of the starter 11 and the MHSG 13 upon the key start request signal, thereby mutually supplementing the situations of the starter start fault or the motor start fault, and particularly, apply the start attempt timeout strategy of the starter or the motor to the failure of the starter cranking or the motor cranking, thereby also protecting the parts of the 48V MHSG system 10 when utilizing the mutual backup between the starter and the motor.

## Claims

1. A vehicle start control method,
wherein an engine start determination is performed by a key start controller 10-1 for detecting a key start request signal, and
wherein the engine start determination is performed by a start possible determination control that determines the start applicability for a starter 11 and a MHSG 13 with a soaking time or an engine start temperature or a 48V battery power, a start means determination control that selects any one of starting with a starter, starting with a MHSG, and starting with the starter/MHSG as a start means, and a start backup determination control that switches the start failure caused by selecting any one the starting with the starter, the starting with the MHSG, and starting with the starter/MHSG as the start means to a backup start.

2. The vehicle start control method of claim 1,
wherein the start possible determination control is performed by
confirming the starter as the start attempt means by determining the operating signal no-response of a starter relay as start impossibility, while determining the operating signal response of the starter relay as start possibility, in a state where there is no failure of the starter, and
confirming the MHSG as the start attempt means by determining the non-generation of a Controller Area Network (CAN) signal or the shortage of 48V battery power as start impossibility, while determining the generation of the Controller Area Network (CAN) signal or the satisfaction of the 48V battery power as start possibility, in a state where there is no failure of the MHSG.

3. The vehicle start control method of claim 2,
wherein the shortage or the satisfaction of the 48V battery power is confirmed by a battery State Of Charge (SOC) and
wherein the battery State Of Charge (SOC) is set to a value greater than a battery SOC normal threshold calculated through the matching of a 48V battery SOC, a battery temperature, and a MHSG temperature factor.

4. The vehicle start control method of claim 2 or 3,
wherein the start possibility is classified into limitative start possibility when there is any one failure of the starter and the MHSG, and the limitative start possibility applies any one of the starter and the MHSG without failure as the start attempt means.

5. The vehicle start control method of claim 1,
wherein the start means determination control is performed by
determining by applying the soaking time or the engine start temperature or the 48V battery power as a starter start condition;
applying the start of the starter as the start attempt means when satisfying the starter start condition;
applying the start of the MHSG or the start of the starter/MHSG as the start attempt means by applying the battery SOC as a motor start condition when not satisfying the starter start condition, and
completing the start by the start attempt by the start with the starter or the start with the MHSG or the start with the starter/MHSG.

6. The vehicle start control method of claim 5,
wherein the satisfaction and non-satisfaction for the starter start condition is determined by a detection value of the soaking time or a detection value of the engine start temperature or a threshold for the battery SOC of the 48V battery power and
wherein the threshold of the battery SOC is a battery SOC lower threshold, and the battery SOC lower threshold is calculated through the matching of the 48V battery SOC, the battery temperature, and the MHSG temperature factor.

7. The vehicle start control method of claim 5 or 6,
wherein the motor start condition applies a battery SOC lower threshold and a battery SOC upper threshold to the battery SOC, and the start with the starter/MHSG is confirmed when the detection value of the battery SOC falls within the region of the battery SOC upper/lower thresholds, while the start with the MHSG is confirmed when it is out of region.

8. The vehicle start control method of claim 1,
wherein the start backup determination control is performed by
determining the start non-completion by applying the start attempt by the start with the starter or the start with the MHSG as an initial start attempt;
performing a backup start determination control with a backup switching variable in the state of the start non-completion; and
performing the backup start control by the backup start attempt excluding the initial start attempt.

9. The vehicle start control method of claim 8,
wherein the backup start determination control is performed by detecting the backup switching variable, and performing backup condition determination with the condition satisfaction for the backup switching variable and
wherein the backup switching variable is a start attempt time, and the backup condition determination applies a threshold for the start attempt time.

10. The vehicle start control method of claim 9,
wherein the start attempt time is accumulated by a timer.

11. The vehicle start control method of claim 8,
wherein the backup start control is performed by
confirming a current start device not reaching the start completion;
selecting a backup start device to which the current start device is replaced;
determining backup start completion by the backup start attempt by the backup start device; and
switching to system protection measure by performing backup condition determination by the condition satisfaction for a backup switching variable before determining the backup start completion, and stopping the backup start attempt upon the backup condition determination.

12. The vehicle start control method of claim 11,
wherein the current start device is any one of the starter and the MHSG in the operating state, and the backup start device is any one of the starter and the MHSG in the non-operating state and
wherein the backup switching variable is a backup start attempt time, and the backup condition determination applies a backup start attempt time threshold for the backup start attempt time.

13. The vehicle start control method of claim 12,
wherein the backup start attempt time is accumulated by a timer.
